# EUROPÄISCHE PATENTANMELDUNG

(11) **EP 3 434 944 A1**
(43) Veröffentlichungstag der Anmeldung: **30.01.2019**
(21) Anmeldenummer: 17183760.2
(22) Anmeldetag: 28.07.2017
(51) Int. Cl.: F16J 15/34

(54) **GLEITRINGDICHTUNG**

(71) Anmelder: Bayer AG, 51373 Leverkusen (DE)
(72) Erfinder: Zimmermann, Werner, 53343 Wachtberg (DE); Hufschmidt, Rolf, 51467 Bergisch Gladbach (DE); Walther, Claus-Diether, 47800 Krefeld (DE)
(74) Vertreter: BIP Patents

(57) **Zusammenfassung**

Die Erfindung betrifft eine Gleitringdichtung, die die zuverlässige Verhinderung einer Explosion durch die Vermeidung von heißen Oberflächen an den beiden Reibpartnern der Gleitringdichtung ermöglicht, wobei die Gleitringdichtung als Reibpartner mindestens einen rotierenden Gleitring und mindestens einen Gegenring umfasst und mindestens einer der Reibpartner aus Aluminiumbronze besteht oder mit einem Überzug aus Aluminiumbronze versehen ist.

## Beschreibung

Die Erfindung betrifft eine Gleitringdichtung, die die zuverlässige Verhinderung einer Explosion durch die Vermeidung von heißen Oberflächen an den beiden Reibpartnern der Gleitringdichtung ermöglicht.

Gleitringdichtungen übernehmen die Abdichtung rotierender Wellen gegenüber einer Wand, z.B. eines Rührwerksbehälters oder einer Pumpe. Hauptkomponenten sind zwei aufeinander gleitende Bauteile, der rotierende (ggfs. befederte) Gleitring und der Gegenring. Der rotierende Gleitring ist auf der Welle befestigt, der Gegenring im Gehäuse (starr). Die Dichtflächen dieser beiden Teile sind plan und parallel zueinander. Diese Flächen sind oberflächenbehandelt (z.B. poliert, geläppt). Als Materialpaarungen werden in der Regel ".harte" und "weiche" Materialien kombiniert. Zu den harten Materialien gehören Metalle, Keramik, Carbide. Zu den "weichen" Materialien gehören Kohlenstoff, und Kunststoffe (https: 1/de.wikipedia.org /wiki/Gleitringdichtung (Stand: 29.08.2016); EagleBurgmann Germany GmbH & Co. KG, Werkstofftabelle für Gleitringdichtungen mit Gegenüberstellung früherer Bezeichnungen (DE01 081 *I* DE4 *I* 1.000 *I* 02.10 *I* 7.2.5; A. W. Chesterton Company, Middlesex Industrial Park, Route 93, STONEHAM, Mass. 02180 USA, Form Nr. 71622 Rev. Nr. 1, Nov. 1982).

Bestimmungsgemäß werden die beiden Reibflächen einer Gleitringdichtung gekühlt durch:
- das Produkt oder
- ein Quenchmedium oder
- einen Kühlkreislauf mit Sperrmedium,
die alle als Kühlmedium fungieren können.
Diese Kühlmedien können flüssig oder gasförmig sein. Typische gasförmige Kühlmedien sind Luft, Stickstoff, CO₂, Edelgase oder sonstige Gase.

In Anlagenteilen, z.B. Rührwerksbehältern oder Pumpen, kann es sowohl im Normalbetrieb als auch bei Störungen zur Bildung von explosionsfähigen Gas/Luft-Gemischen kommen. Die Wahrscheinlichkeit des Auftretens eines explosionsfähigen Gemisches kann in diesen Anlageteilen von "selten und kurzzeitig (entsprechend einer Zone 2)", über "gelegentlich" (entsprechend einer Zone 1) bis zu "ständig, langzeitig oder häufig wiederkehrend" (entsprechend einer Zone 0) reichen (Technische Regeln für Betriebssicherheit -TRBS 2152, Gefährliche explosionsfähige Atmosphäre - Allgemeines - vom 15.03.2006).

Bei orts- und zeitgleichem Vorhandensein eines explosionsfähigen Gemischs und einer Zündquelle kann es zu einer Explosion kommen. Durch eine derartige Explosion können Personen- und/oder Sachschäden hervorgerufen werden.

Nach Maßgabe des Auftretens explosionsfähiger Gemische sind gemäß Regelwerk Zündquellen zu vermeiden. Gem. DIN EN 1127-1 - Explosionsfähige Atmosphären- Explosionsschutz- Teil1 Grundlagen und Methodik, Fassung von 2011 - gehören heiße Oberflächen zu den dort genannten 13 Zündquellenarten. Dort wird beschrieben: *"Kommt explosionsfähige Atmosphäre mit heißen Oberflächen in Berührung, kann es zu einer Entzündung kommen [...]. Die Zündfähigkeit einer erhitzten Oberfläche hängt von der Art und der Konzentration des jeweiligen Stoffes im Gemisch mit Luft ab. Die Zündfähigkeit nimmt mit zunehmender Temperatur und mit zunehmender Oberfläche des erhitzten Körpers zu. Weiterhin hängt die eine Entzündung auslösende Temperatur von Größe und dem Oberflächenprofil des erhitzten Körpers, vom Konzentrationsgefälle im Bereich der Oberfläche und zum Teil auch vom Oberflächenmaterial ab [*...*]. Neben leicht erkennbaren heißen Oberflächen wie Heizkörpern, Trockenschränken, Heizspiralen usw. können auch mechanische Vorgänge und Zerspanungsprozesse zu gefährlichen Temperaturen führen. Hierzu sind auch Geräte, Schutzsysteme und Komponenten zu zählen, die mechanische Energie in Wärme umwandeln, z.B. alle Arten von Reibungskupplungen und mechanisch wirkenden Bremsen (z. B. an Eahrzeugen und Zentrifugen). Weiterhin können alle sich bewegenden Teile in Lagern, Wellendurchführungen, Stopfbuchsen usw. bei ungenügender Schmierung zu Zündquellen werden. "* Dies gilt auch für explosionsfähige Gemische i.S. der Gefahrstoffverordnung (Verordnung zum Schutz vor Gefahrstoffen (Gefahrstoffverordnung- GefStoffV) vom 01.06.2015).

Gleitringdichtungen sind ein häufig benutzter Typ von Wellendurchführungen. Durch die Reibung von Gleitring und Gegenring kann es bei Ausfall der Kühlung zu einem Temperaturanstieg der beiden Reibpartner kommen. Dieser Temperaturanstieg kann zum Erreichen oder Überschreiten der Zündtemperatur eines brennbaren Gases führen. D.h. die Gleitringdichtung kann zu einer wirksamen Zündquelle entweder im Gasraum in der Gleitringdichtung und/oder in einem der beiden durch die Gleitringdichtung getrennten Räume werden. Bei Ausfall der Kühlung oder der Gasschmierung kommt es zu einem unzulässigen Temperaturanstieg an den Flächen der beiden Reibpartner. Um einen Ausfall der Kühlung rechtzeitig zu erkennen, sind prozessleittechnische Überwachungseinrichtungen erforderlich, die die Einleitung von Gegenmaßnahmen veranlassen.

Die erforderliche Zuverlässigkeit der prozessleittechnischen Überwachungseinrichtungen ist abhängig von der Wahrscheinlichkeit des Auftretens (Ex-Zone) einer explosionsfähigen Atmosphäre. So ist der Aufwand für die Zündquellenvermeidung durch prozessleittechnische Überwachungseinrichtungen in Zonen 0 oder 1 oft erheblich.

Es bestand daher die Aufgabe, eine Lösung zur zuverlässigen Verhinderung einer Explosion durch die Vermeidung von heißen Oberflächen an den beiden Reibpartnern der Gleitringdichtung auch bei Ausfall der Kühlung der Gleitringdichtung durch das Kühlmedium bereitzustellen. Durch diese Zündquellenvermeidung kann, falls nicht durch andere Umstände gefordert, der Aufwand für die prozessleittechnischen Überwachungseinrichtungen stark reduziert werden bzw. ganz entfallen.

Zur Vermeidung von heißen Oberflächen werden erfindungsgemäß Aluminiumbronzen (CuAl-Legierungen) als Material für eine oder beide Reibpartner (rotierender Gleitring und/oder Gegenring) in Gleitringdichtungen verwendet. Bevorzugt werden nickelfreie Aluminiumbronzen verwendet. Diese wurden als Werkstoff für die vorgenannten Anwendungen bisher nicht verwendet. Insbesondere wird eine spezielle nickelfreie Aluminiumbronze, AMPCO 25 der Fa. AMPCO Metal S.A. genannt, deren Eignung bei der Physikalisch-Technischen Bundesanstalt untersucht worden ist (Meyer, L., Abschluss des Forschungsvorhabens zur Untersuchung der Zündwirksamkeit von mechanischen Funken beim Einsatz von Bronze ptb 2015-11).

Diese Untersuchungen hinsichtlich der Zündwirksamkeit von heißen Oberflächen und mechanisch erzeugten Funken, z. B. Schleiffunken, an einer Aluminiumbronze ergaben, dass im untersuchten Bereich hinsichtlich Relativgeschwindigkeit (bis zu 20 m/s) und Anpressdruck (bis zu 40 N/mm²) keine zündwirksamen heißen Oberflächen für Stoffe der Explosionsgruppe IIA (repräsentativer Vertreter: Propan) auftraten. Selbst Ethen/Luft-Gemische - mit Ethen als repräsentativem Vertreter der Explosionsgruppe IIB - waren nicht zur Entzündung zu bringen. Durch die am Reibstift auftretenden Temperaturen konnten jedoch Wasserstoff/Luft-Gemische (Wasserstoff als typischer Vertreter der Explosionsgruppe IIC), die noch wesentlich zündempfindlicher als Ethen-/Luftgemische sind, entzündet werden. Zitat aus Meyer, L., Abschluss des Forschungsvorhabens zur Untersuchung der Zündwirksamkeit von mechanischen Funken beim Einsatz von Bronze ptb 2015-11: "Die Temperaturentwicklung im Reibstift erfolgte in Abhängigkeit der eingebrachten Leistungsdichte.

Bei größeren Leistungsdichten wurden höhere Maximaltemperaturen erreicht als bei niedrigeren. Des Weiteren war die Zeitspanne bis zum Erreichen der Maximaltemperatur bei niedrigeren Leistungsdichten deutlich länger. Bei einer Leistungsdichte von 2 W/mm² wurden maximal 165 °C gemessen. Bei 50 W/mm² konnten maximal 806 °C gemessen werden.

Die Zündversuche haben ergeben, dass bei den vorliegenden Reibpartnern Wasserstoff-LuftGemische gezündet werden können. Es ist eine Leistungsdichte von mindestens 9 W/mm² für eine Zündung erforderlich. Die Zündgrenzen liegen damit etwa bei dem dreifachen Wert im Vergleich zu homogenen Edelstahl Reibpartnern (2, 7 W/mm²) und bei dem 1 ,6-fachen Wert von homogenen Bau-stahl Reibpartnern (5,48 W/mm²).

In Zündversuchen mit Ethen konnten mit den Reibpartnern aus den vorliegenden Werkstoffen keine Zündungen erzeugt werden.

Aus diesem Ergebnis lässt sich ableiten, dass sich bestimmte nickelfreie Aluminiumbronzen (z.B. AMPCO 25 der Fa. AMPCO Metal S.A.) als Werkstoff für den rotierenden Gleitring und/oder Gegenring in Gleitringdichtungen eignen hinsichtlich der Vermeidung von wirksamen Zündquellen (hier mechanisch erzeugte Funken und kleine heiße Oberflächen) bis zu Relativgeschwindigkeiten von bis zu 20 m/s.

Geeignete Aluminiumbronzen, bevorzugt nickelfreie bzw. nickelarme Aluminiumbronzen, z.B. AMPCO 25 der Firma AMPCO Metal S.A., zeichnen sich auch aus durch:
- gute Verschleißbeständigkeit,
- homogene, feste Werkstoffbeschaffenheit
- gute Bearbeitungsmöglichkeit der Oberflächen (polieren, läppen)
- ausreichende Härte
- hohe Korrosionsbeständigkeit
- sehr gute Wärmeleitfähigkeit

Der Anwendungsbereich für die erfindungsgemäßen Gleitringdichtungen umfasst u.a. folgende Industriebranchen:
- Pharmazeutische Industrie
- Agrochemische Industrie (incl. Behandlung von Saatgüter)
- Lebensmittelindustrie
- Chemische Industrie
- Kraftwerke
- Kunststoffindustrie

Die vorgeschlagene Verwendung von spezieller Aluminiumbronze umfasst die Fertigung eines oder beider Reibpartner (rotierender Gleitring und/oder Gegenring) sowohl als Vollmaterial als auch als Überzug (z.B. Beschichtung, Plattierung, Verklebung) auf einen nicht aus Aluminiumbronze gefertigten Grundkörper nach einem der im Stand der Technik üblichen Verfahren, z. B. spanabhebende Formgebung entsprechend der mechanischen Anforderungen.

## Patentansprüche

1. Gleitringdichtung, umfassend als Reibpartner mindestens einen rotierenden Gleitring und mindestens einen Gegenring, **dadurch gekennzeichnet, dass** mindestens einer der Reibpartner aus Aluminiumbronze besteht oder mit einem Überzug aus Aluminiumbronze versehen ist.

2. Gleitringdichtung nach Anspruch 1, wobei alle Reibpartner aus einer oder unterschiedlichen Aluminiumbronzen bestehen oder mit einem Überzug aus einer oder unterschiedlichen Aluminiumbronzen versehen sind.

3. Gleitringdichtung nach Anspruch 1 oder 2, wobei die Aluminiumbronze nickelfrei oder nickelarm ist.

4. Gleitringdichtung nach Anspruch 3, wobei die Aluminiumbronze AMPCO 25 ist.

5. Anwendung von Aluminiumbronze als Material für mindestens einen Reibpartner einer Gleitringdichtung.
